# EUROPEAN PATENT APPLICATION

(11) **EP 4 545 857 A1**
(43) Date of publication of application: **30.04.2025**
(21) Application number: 23857541.9
(22) Date of filing: 04.07.2023
(51) Int. Cl.: F24C 7/08, A47J 36/32, H04N 23/57, G06V 20/68, G06Q 50/10, G06F 3/048, F24C 15/00, F24C 15/32

(54) **COOKING DEVICE AND COOKING DEVICE CONTROL METHOD**

(30) Priority: 24.08.2022 KR 20220106449; 11.01.2023 KR 20230004340
(71) Applicant: Samsung Electronics Co., Ltd., Suwon-si, Gyeonggi-do 16677 (KR)
(72) Inventor: KA, Keehwan, Suwon-si, Gyeonggi-do 16677 (KR); HAN, Seongjoo, Suwon-si, Gyeonggi-do 16677 (KR)
(74) Representative: Gulde & Partner
(86) International application number: PCT/KR2023/009419
(87) International publication number: WO 2024/043503

(57) **Abstract**

The disclosed cooking device comprises: a display; a camera for acquiring an image of the inside of a chamber; a memory for storing a learning model used for food identification; and a controller electrically connected to the display, the camera, and the memory, wherein the controller configured to acquire a plurality of candidate items related to the food identified from the acquired image using the learning model, determine at least two recommended items from among the plurality of candidate items based on a confidence value of each of the plurality of candidate items and control the display such that at least two recommended items are displayed.

## Description

### [Technical Field]

The present disclosure relates to a cooking device and a method of controlling the cooking device.

### [Background Art]

Cooking devices, as devices for cooking an object to be cooked such as food by heating, provide various functions related to cooking, such as heating, thawing, drying, and sterilizing of the object to be cooked. For example, the cooking devices may refer to ovens such as gas ovens or electric ovens, microwave heating devices (hereinafter, referred to as microwaves), gas ranges, electric ranges, gas grills, or electric grills.

In general, ovens cook food by transferring heat directly to the food or heating the interior of a cooking chamber using a heater that produces heat. Microwaves cook food by frictional heat between molecules, which is produced by using high-frequency waves as a heating source to disturb molecular layouts of the food.

In recent years, technologies for recognizing food placed in a cooking apparatus and controlling the operation of the cooking device according to the recognized food by using artificial intelligence technology are in development.

### [Disclosure]

### [Technical Solution]

Provided are a cooking device capable identifying an object to be cooked in a chamber and providing a user with recommended items for automatically cooking the object to be cooked and a method of controlling the cooking device.

In accordance with an aspect of the present disclosure, a cooking device 1 includes: a display 41; a camera 60 configured to acquire an image of the inside of the chamber 50; a memory 220 configured to store a learning model used for identification of the object to be cooked; and a controller 200 electrically connected to the display, the camera, and the memory, wherein the controller configured to acquire a plurality of candidate items related to the object to be cooked identified from the image acquired by using the learning model, determine at least two recommended items among the plurality of candidate items based on a confidence value of each of the plurality of candidate items, and control the display to display the at least two recommended items.

In accordance with another aspect of the present disclosure, a method of controlling a cooking device includes: acquiring an image of the inside of a chamber 50 by using a camera 60; identifying, by a controller 200, an object to be cooked inside the chamber from the acquired image by using a learning model obtained from a memory 220 or a server 3; obtaining, by the controller, a plurality of candidate items related to the object to be cooked by using the learning model; determining, by the controller, at least two recommended items among the plurality of candidate items based on a confidence value of each of the plurality of candidate items; and displaying the at least two recommended items via the display.

According to the disclosed cooking device and the method of controlling the cooking device, recommended items for automatic cooking of the object to be cooked may be provided to the user by identifying the object to be cooked in the chamber.

In addition, according to the disclosed cooking device and the method of controlling the cooking device, more accurate cooking information may be provided to the user by extracting a plurality of candidate items estimated as the object to be cooked and determining recommended items according to the confidence value of each of the plurality of candidate items.

The technical problems to be solved and effects to be obtained by the present disclosure are not limited to the aforementioned problems and effects, and any other technical problems and effects not mentioned herein will be clearly understood from the following description by those skilled in the art to which the present disclosure pertains.

### [Description of Drawings]

FIG. 1 illustrates a network system implemented by various electronic devices.
FIG. 2 is a perspective view of a cooking device according to an embodiment.
FIG. 3 is a cross-sectional view of a cooking device according to an embodiment.
FIG. 4 illustrates a control block diagram of a cooking device according to an embodiment.
FIG. 5 illustrates a structure of the controller described in FIG. 4.
FIG. 6 is a flowchart for describing a method of controlling a cooking device according to an embodiment.
FIG. 7 shows an example of a screen displaying a cooking device according to an embodiment.
FIGS. 8 and 9 are flowcharts for describing the method of controlling the cooking device described in FIG. 6 in more detail.
FIG. 10 illustrates an item list including alternative items related to candidate items.
FIG. 11 is a flowchart describing a method of updating the item list of FIG. 10.
FIG. 12 is a flowchart describing an example of interaction between a cooking device and a server.
FIG. 13 is a flowchart describing an example of interaction among a cooking device, a server, and a user device expanded from the example of FIG. 12.
FIG. 14 is a flowchart describing another example of interaction between a cooking device and a server.
FIG. 15 is a flowchart describing another example of interaction among a cooking device, a server, and a user device expanded from the example of FIG. 14.

### [Mode for Invention]

It is understood that various embodiments of the disclosure and associated terms are not intended to limit technical features herein to particular embodiments, but encompass various modifications, equivalents, or substitutions.

Like reference numerals may be used for like or related elements throughout the drawings.

The singular form of a noun corresponding to an item may include one or more items unless the context states otherwise.

Throughout the specification, "A or B", "at least one of A and B", "at least one of A or B", "A, B or C", "at least one of A, B and C", and "at least one or A, B, or C" may each include any one or all the possible combinations of A, B and C.

Terms like "first", "second", etc., may be simply used to distinguish an element from another, without limiting the elements in a certain sense (e.g., in terms of importance or order).

When an element (e.g., first element) is mentioned as being "coupled" or "connected" to another element (e.g., second element) with or without an adverb "functionally" or "communicatively", it means that the element may be connected to the other element directly (e.g., by wire), wirelessly, or through a third element.

It will be further understood that the terms "including" and/or "having", when used in this specification, specify the presence of stated features, figures, processes, operations, elements, parts or combinations thereof, but do not preclude the possible presence or addition of one or more other features, figures, processes, operations, elements, components, and/or groups thereof

When an element is mentioned as being "connected to", "coupled to", "supported on", or "contacting" another element, it includes not only a case that the elements are directly connected to, coupled to, supported on or contact each other but also a case that the elements are connected to, coupled to, supported on or contact each other through a third element.

When an element is mentioned as being located "on" another element, it implies not only that the element is abut on the other element but also that a third element exists between the two elements.

The term "and/or" is interpreted to include a combination or any of associated elements.

Hereinafter, the principle and embodiments of the disclosure will now be described with reference to accompanying drawings.

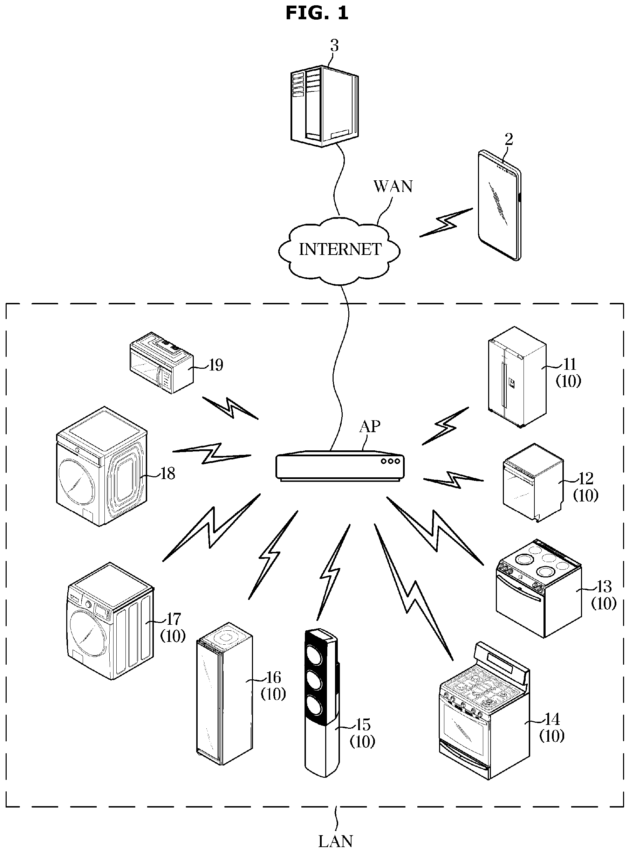

FIG. 1 illustrates a network system implemented by various electronic devices.

Referring to FIG. 1, a home appliance 10 may include a communication module configured to communicate with other home appliances, a user device 1, or a serve 3, a user interface configured to receive a user input or output information to the user, at least one processor configured to control the operation of the home appliance 10, and at least one memory for storing programs to control the operation of the home appliance 10.

The home appliance 10 may be at least one of the household electrical appliances. For example, the home appliance 10 may include at least one of a refrigerator 11, a dishwasher 12, an electric range 13, an electric oven 14, an air conditioner 15, a clothes manager 16, a washing machine 17, a dryer 18, and a microwave oven 19 as illustrated herein, but is not limited thereto, and may include various types of home appliances not shown in the drawing such as cleaning robots, vacuum cleaners, and televisions. In addition, these home appliances described above are merely examples, and any devices connected to other home appliances, the user device 2, and the server 3 and capable of performing operations described below may be included in the home appliance 10 according to an embodiment.

The server 3 may include a communication module configured to communicate with other servers, the home appliance 10, or the user device 2, at least one processor configured to process data received from other servers, the home appliance 10, and the user device 2, and at least one memory for storing programs for processing the data or the processed data. The server 3 may be implemented as various computing devices such as workstations, clouds, data drives, and data stations. The server 3 may be implemented as one or more servers physically or logically divided based on function, detailed configuration of the function, or data, transmit and receive data via communication between the respective servers, and process the transmitted and received data.

The server 3 may perform functions such as managing a user account, registering the home appliance 10 in linkage to the user account, and managing or controlling the registered home appliance 10. For example, the user may create a user account by accessing the server 3 via the user device 2. The user account may be identified by an ID and a password set by the user. The server 3 may register the home appliance 10 to the user account according to a predetermined procedure. For example, the server 3 may register, manage, and control the home appliance 10 by connecting identification information (e.g.: serial number or MAC address) of the home appliance 10 to the user account. The user device 2 may include a communication module capable of communicating with the home appliance 10 or the server 3, a user interface configured to receive a user input or output information to the user, at least one processor configured to control the operation of the user device 2, and at least one memory for storing programs to control the operation of the user device 2.

The user device 2 may be carried by the user or placed in a user's home, office, or the like. The user device 2 may include a personal computer, a terminal, a portable telephone, a smart phone, a handheld device, a wearable device, and the like, but is not limited thereto.

In the memory of the user device 2, programs to control the home appliance 10, i.e., applications. The applications may be sold installed on the user device 2 or downloaded from an external server and installed.

The user may create a user account by accessing the server 3 by executing an application installed on the user device 2, and register the home appliance 10 by communicating with the server 3 based on the logged-in user account.

For example, by manipulating the home appliance 10 to make the home appliance 10 access the server 3 in accordance with a procedure guided by an application installed on the user device 2, identification information (e.g.: serial number or MAC address) of the home appliance 10 is registered in the corresponding user account in the server 3, so that the home appliance 10 is registered in the user account.

The user may control the home appliance 10 by using the application installed on the user device 2. For example, when the user logs in on the user account with the application installed in the user device 2, the home appliance 10 registered with the user account may appear, and when a control command is input for the home appliance 10, the control command may be transmitted to the home appliance 10 via the server 3.

A network may include both a wired network and a wireless network. The wired network may include a cable network or a telephone network, and the wireless network may include any network that transmits or receives signals in radio waves. The wired network and the wireless network may be connected to each other.

The network may include a wide area network (WAN) such as the Internet, a local area network (LAN) formed around an access point (AP), and/or a short-range wireless network that does not pass through an access point (AP). Short-range wireless networks may include, but are not limited to, Bluetooth (IEEE 802.15.1), Zigbee (IEEE 802.15.4), Wi-Fi Direct, Near Field Communication (NFC), and Z-Wave.

The access point AP may connect the home appliance 10 or the user device 2 to the wide area network WAN connected to the server 3. The home appliance 10 or the user device 2 may be connected to the server 3 via the wide area network WAN.

The access point AP may communicate with the home appliance 10 or the user device 2 by using wireless communication such as Wi-Fi (IEEE 802.11), Bluetooth (IEEE 802.15.1), and Zigbee (IEEE 802.15.4) and access the wide area network WAN by using wired communication, but is not limited thereto.

According to various embodiments, the home appliance 10 may be directly connected to the user device 2 or the server 3 without passing through the access point AP.

The home appliance 10 may be connected to the user device 2 or the server 3 via the a long-range wireless network or a short-range wireless network.

For example, the home appliance 10 may be connected to the user device 2 via a short-range wireless network (e.g.: Wi-Fi direct).

As another example, the home appliance 10 may be connected to the user device 2 or the server 3 via a wide area network WAN by using a long-range wireless network (e.g.: cellular communication module).

As another example, the home appliance 10 may access the wide area network WAN by using wired communication and may be connected to the user device 2 or the server 3 via the wide area network WAN.

In the case where the home appliance 10 accesses the wide area network WAN by using the wired communication, the home appliance 10 may operate as an access point. Accordingly, the home appliance 10 may connect another home appliance to a wide area network WAN to which the server 3 is connected. In addition, another home appliance may connect the home appliance 10 to a wide area network WAN to which the server 3 is connected.

The home appliance 10 may transmit information on the operation or status to other home appliances, the user device 2, or the server 3 via a network. For example, upon receiving a request from the server 3, upon occurrence of a particular event in the home appliance 10, or periodically or in real time, the home appliance 10 may transmit information on the operation or status to other home appliances, the user device 2, or the server 3. Upon receiving the information on the operation or status from the home appliance 10, the server 3 may update information on the operation or status that has been stored, and transmit updated information on the operation and status of the home appliance 10 to the user device 2 via the network. In this regard, the updating of the information may include various operations to modify the existing information such as an operation of adding new information to the existing information and an operation of replacing the existing information with the new information.

The home appliance 10 may acquire various information from other home appliances, the user device 2, or the server 3 and provide the user with the acquired information. For example, the home appliance 10 may acquire information on functions of the home appliance 10 (e.g., cooking instructions and washing instructions) from the server 3 and various environmental information (e.g., weather, temperature, and humidity), and output the information acquired via the user interface.

The home appliance 10 may operate in accordance with a control command received from other home appliances, the user device 2, or the server 3. For example, upon winning prior approval of the user to operate according to a control command of the server 3 even without a user input, the home appliance 10 may operate according to the control command received from the server 3. In this case, the control command received from the server 3 may include a control command input by the user via the user device 2 or a control command based on predetermined conditions, but is not limited thereto.

The user device 2 may transmit information on the user to the home appliance 10 or the server 3 through the communication module. For example, the user device 2 may transmit information on a position of the user, a physical conditioning of the user, a preference of the user, a schedule of the user, and the like to the server 3. The user device 2 may transmit information on the user to the server 3 according to prior approval of the user.

The home appliance 10, the user device 2, or the server 3 may determine a control command by using a technology such as artificial intelligence (AI). For example, the server 3 may receive information on the operation or status of the home appliance 10 or information on the user of the user device 2, process the information by using a technology such as AI, and transmit a result of the processing or a control command to the home appliance 10 or the user device 2 based on the result of the processing.

A cooking device 1 which will be described below corresponds to the above-described home appliance 10.

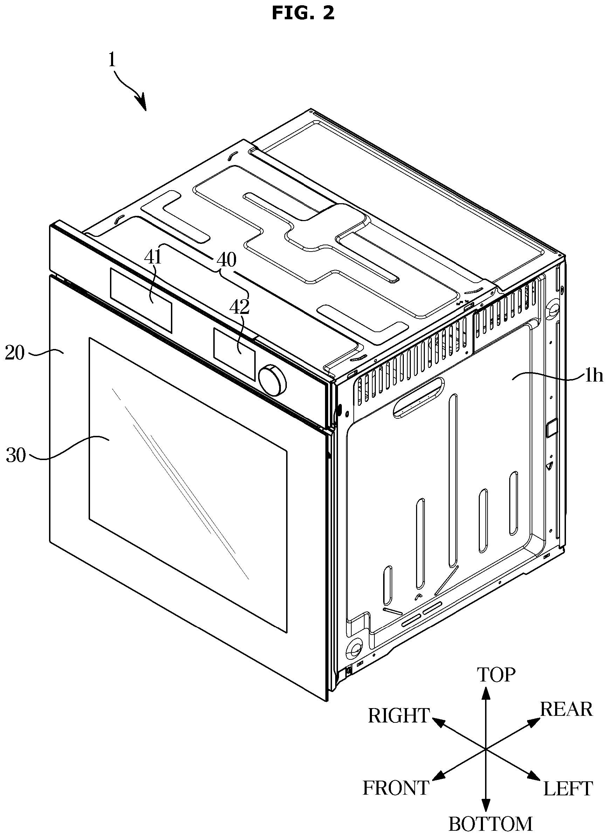

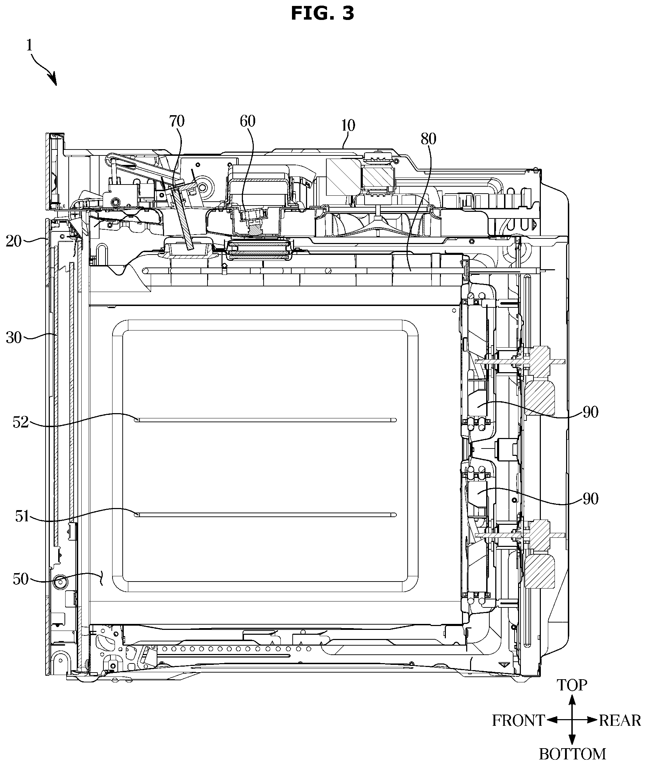

FIG. 2 is a perspective view of a cooking device according to an embodiment. FIG. 3 is a cross-sectional view of a cooking device according to an embodiment.

Referring to FIGS. 2 and 3, a cooking device 1 may include a housing 1h defining an exterior appearance, and a door 20 provided to open and close an opening of the housing 1h. A window 30 may be provided at the door 20. The window 30 may be formed of a transparent material. The user may observe the inside of a chamber 50 through the window 30 when the door 20 is closed. The window 30 may be formed of a translucent member, an opaque member, or a transparent display.

A user interface 40 configured to display information related to the operation of the cooking device 1 and obtain a user input may be provided on the housing 1h of the cooking device 1. The user interface 40 may include a display 41 to display information related to the cooking device 1 and an input device 42 to obtain a user input. The display 41 and the input device 42 may be provided at various positions of the housing 1h. For example, the display 41 and the input device 42 may be located on an upper front surface of the housing 1h.

The display 41 may be provided as various types of display panels. For example, the display 41 may include a liquid crystal display (LCD) panel, a light emitting diode (LED) panel, an organic light emitting diode (OLED) panel, or a micro-LED panel. The display 41 may also be used as an input device by including a touch screen to be used.

The display 41 may display information input by the user or information to be provided to the user as various screens. The display 41 may display information related to the operation of the cooking apparatus 1 in at least one of an image or text. In addition, the display 41 may display a graphic user interface (GUI) that enables the cooking apparatus 1 to be controlled. That is, the display 41 may display a user interface element (UI element) such as an icon.

The input device 42 may transmit an electrical signal (voltage or current) corresponding to the user input to a controller 200. The input device 42 may include various buttons and/or a dial. For example, the input device 42 may include at least one of a power button to power on or off the cooking device 1, a start/stop button to start or stop a cooking operation, a temperature button to set a cooking temperature, and a time button to set a cooking time. Such various buttons may be provided as mechanical buttons or touch buttons.

The dial included in the input device 42 may be rotatably provided. One of a plurality of recommended items related to the object to be cooked may be selected by turning the dial. The UI elements displayed on the display 41 may be sequentially shifted by turning the dial. The cooking apparatus 1 may perform cooking according to a cooking course corresponding to the selected recommended item. Also, in response to selection of an item different from the recommended item by the user, the cooking device 1 may perform cooking according to a cooking course corresponding to the new item.

The cooking apparatus 1 may include the chamber 50 located in the housing 1h and containing an object to be cooked. An opening may be provided on the front of the housing 1h. The user may put the object to be cooked into the chamber 50 through the opening of the housing 1h. The chamber 50 may be provided in the form of a rectangular parallelepiped.

The plurality of rails 51 and 52 may be arranged on the left and right inner surfaces of the chamber 50 to place the tray T. The rails may also be referred to as supporters. For example, the plurality of rails 51 and 52 may be formed to protrude from left and right inner walls of the chamber 50. In another example, the plurality of rails 51 and 52 may be separate structures to be installed at the left and right inner walls of the chamber 50.

Each of the plurality of rails 51 and 52 has a predetermined length in the front-back direction. The plurality of rails 51 and 52 may be arranged to be spaced apart from each other in the vertical direction. For example, the plurality of rails 51 and 52 may include the first rail 51 and the second rail 52 formed at a higher position than that of the first rail 51. The first rail 51 may be located at first height from the bottom of the chamber 50. The second rail 52 may be located at second height from the bottom of the chamber 50, which is higher than the first height.

The first rail 51 may refer to a pair of rails located on the left and right inner walls of the chamber 50 at the first height. The second rail 52 may refer to a pair of rails located on the left and right inner walls of the chamber 50 at the second height. The tray may be mounted at various heights in the chamber 50 by the plurality of rails 51 and 52. An object to be cooked may be placed on the upper surface of the tray. The tray may also be placed on the bottom of the chamber 50.

Although two rails 51 and 52 are exemplarily provided on both side walls of the chamber 50, the present disclosure is not limited thereto. Depending on the design, various numbers of rails may be provided.

Various components required for the operation of the cooking device 1 may be arranged between the chamber 50 and the housing 1h. For example, the cooking device 1 may include a camera 60, a light 70, a fan 90 and various circuits.

The camera 60 may acquire an image of the interior of the chamber 50. The camera 60 may transmit data of the obtained image to the controller 200. To secure a field of view (FOV) of the camera 60, a portion of the upper plane of the chamber 50 adjacent to the position of the camera 60 may be formed with a transparent material (e.g., transparent heat resistant glass).

The light 70 may emit light into the chamber 50. The interior of the chamber 50 may be lighted by the light emitted from the light 70. Accordingly, brightness, contrast and/or definition of the image obtained by the camera 60 may increase, and discrimination of an object to be cooked contained in the image may be improved. Another portion of the upper plane of the chamber 50 adjacent to the location of the light 70 may be equipped with a diffuser material to transmit and diffuse the light from the light 70 into the chamber 50

The heater 80 may be located above the chamber 50. The heater 80 may supply heat into the chamber 50. An object to be cooked may be cooked by the heat generated by the heater 80. One or more heaters 80 may be provided. A heating level and a heating time of the heater 80 may be controlled by the controller 200. Output power and the heating time of the heater 80 may be controlled in different ways according to the type, number, and/or size of the object to be cooked. That is, the operation of the heater 80 may be controlled in different manners depending on the cooking course.

The fan 90 may circulate air in the chamber 50. The fan 90 may include a motor and a blade. At least one fan 90 may be provided. As the fan 90 operates, air heated by the heater 80 may circulate in the chamber 50. Thus, heat generated by the heater 80 may be evenly transferred from the top to the bottom of the chamber 50. The rotation speed and rotation time of the fan 90 may be controlled by the controller 200. The output power and rotation time of the fan 90 may be controlled in different manners according to according to the type, number, and/or size of the object to be cooked. That is, the operation of the fan 90 may be controlled in different manners according to the cooking course.

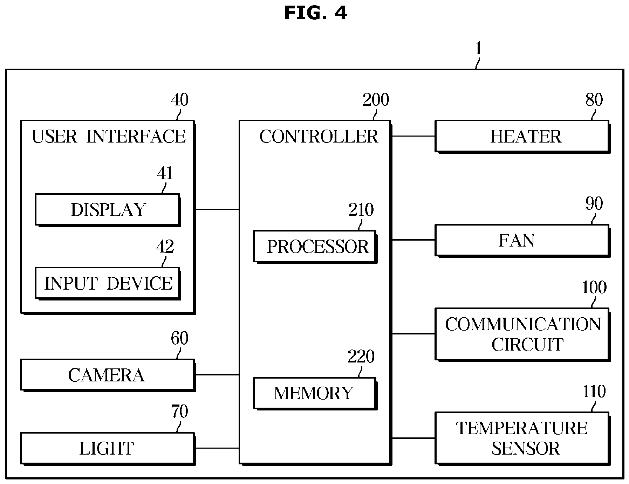

FIG. 4 illustrates a control block diagram of a cooking device according to an embodiment.

Referring to FIG. 4, a cooking device 1 may include a user interface 40, a camera 60, a light 70, a heater 80, a fan 90, a communication circuit 100, a temperature sensor 110, a timer 120, and a controller 200. The controller 200 may be electrically connected to components of the cooking device 1 and control the components of the cooking device 1.

The user interface 40 may include a display 41 and an input device 42. The display 41 may display information related to the operation of the cooking apparatus 1. The display 41 may display information input by the user or information to be provided for the user in various screens.

The input device 42 may obtain a user input. The user input may include various commands. For example, the input device 42 may obtain at least one of a command to select an item, a command to select a cooking course, a command to control the heating level of the heater 80, a command to control the cooking time, a command to control the cooking temperature, a command to start cooking or a command to stop cooking. The user input may be obtained from the user device 2.

The controller 200 may control the operation of the cooking device 1 by processing the command received through at least one of the input device 42 or the user device 2. The cooking apparatus 1 may automatically perform cooking based on cooking course information obtained from the memory 220, the user device 2 or the server 3.

The camera 60 may acquire an image of the interior of the chamber 50. The controller 200 may control the camera 60 to obtain the image of the inside of the chamber 50 when the cooking apparatus 1 is powered on and the door 20 is closed. The controller 200 may control the camera 60 to obtain the image of the inside of the chamber 50 at predetermined time intervals until cooking is completed after the cooking is started. The controller 200 may use a plurality of images acquired while a cooking operation is performed to judge a cooking state of the object to be cooked.

The controller 200 may identify an object to be cooked contained in the image acquired by the camera 60. The controller 200 may identify the object to be cooked from the image by using a learning model obtained from the memory 220 or the server 3 and acquire a plurality of candidate items related to the identified object to be cooked. The controller 200 may determine at least two recommended items among the plurality of candidate items based on a confidence value of each of the plurality of candidate items. In addition, the controller 200 may control the display 41 to display the at least two recommended items. The recommended items may also be displayed via the user device 2.

The light 70 may emit light into the chamber 50. The controller 200 may control the light 70 to emit light when the cooking device 1 is powered on. The controller 200 may control the light 70 to emit light until the cooking is completed or until the cooking device 1 is powered off.

The heater 80 may supply heat into the chamber 50. The controller 200 may control output power of the heater 80. For example, the controller 200 may control the heating level and the heating time of the heater 80. The controller 200 may control the heating level and heating time of the heater 80 according to the type, number, size, and/or cooking course of the object to be cooked.

The fan 90 may circulate air in the chamber 50. The controller 200 may control the output power of the fan 90. For example, the controller 200 may control the rotation speed and rotation time of the fan 90. The controller 200 may control the rotation speed and rotation time of the fan 90 according to the type, number, size, and/or cooking course of the object to be cooked.

The communication circuit 100 may perform connection to at least one of the user device 2 or the server 3 over a network. For example, the communication circuit 100 may receive a remote control signal from the user device 2. The controller 200 may control the communication circuit 100 to transmit display information for displaying the at least two recommended items on an external user device 2 to at least one of the user device 2 and the server 3.

The controller 200 may acquire various information and/or data from the server 3 via the communication circuit 100. The controller 200 may obtain a learning model from the server 3 via the communication circuit 100. In addition, the controller 200 may obtain an item list including a plurality of candidate items related to the object to be cooked and alternative items respectively associated with the plurality of candidate items, from the server 3.

The communication circuit 100 may include various communication modules. The communication circuit 100 may include a wireless communication module and/or a wired communication module. As the wireless communication technology, a wireless local area network (LAN), a home radio frequency (RF), infrared communication, ultra-wide band (UWB) communication, Wi-Fi, Bluetooth, Zigbee, etc., may be applied .

The temperature sensor 110 may detect temperature in the chamber 50. The temperature sensor 110 may be installed in various positions in the chamber 50. The temperature sensor 110 may transmit an electrical signal corresponding to the detected temperature to the controller 200. The controller 200 may control at least one of the heater 80 and the fan 90 to maintain the inside of the chamber 50 at a cooking temperature determined by the type, number, size, and/or cooking course of the object to be cooked.

Besides, the cooking apparatus 1 may include various sensors. For example, the cooking apparatus 1 may include a current sensor and a voltage sensor. The current sensor may measure a current supplied to the electronic components of the cooking apparatus 1. The voltage sensor may measure a voltage applied to the electronic components of the cooking apparatus 1.

The controller 200 may include the processor 210 and the memory 220. The processor 210 may include logic circuits and operation circuits in hardware. The processor 210 may control the electrically connected components of the cooking apparatus 1 based on programs, instructions and/or data stored in the memory 220 for the operation of the cooking apparatus 1. The controller 200 may be implemented with a control circuit including circuit elements such as a condenser, an inductor and a resistor. The processor 210 and the memory 220 may be implemented in separate chips or in a single chip. Furthermore, the controller 200 may include a plurality of processors and a plurality of memories.

The memory 220 may store the programs, applications and/or data for the operation of the cooking apparatus 1 and store data created by the processor 210. The memory 220 may include a non-volatile memory such as a read only memory (ROM) and a flash memory for storing the data for a long time. The memory 220 may include a volatile memory for temporarily storing data, such as a static random access memory (SRAM) and a dynamic random access memory (DRAM).

The components of the cooking apparatus 1 are not limited thereto. The cooking apparatus 1 may further include various components in addition to the aforementioned components, and it is also possible that some of the aforementioned components are omitted.

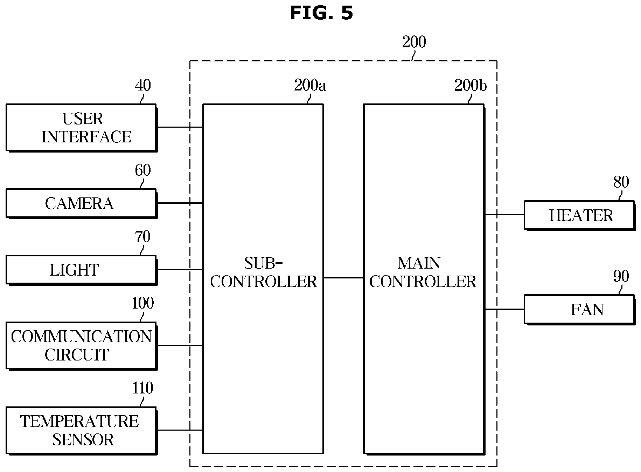

FIG. 5 illustrates a structure of the controller described in FIG. 4.

Referring to FIG. 5, the controller 200 may include a sub-controller 200a and a main controller 200b. The sub-controller 200a and the main controller 200b may be electrically connected to each other, and may each include a separate processor and a separate memory. The main controller 200b may be electrically connected to the heater 80 and the fan 90 to control the operations of the heater 80 and the fan 90.

The sub-controller 200a may control the operations of the user interface 40, the camera 60, the light 70, the communication circuit 100, and the temperature sensor 110. The sub-controller 200a may process an electrical signal corresponding to an input by the user through the user interface 40, and control the user interface 40 to display information on the operation of the cooking apparatus 1.

In addition, the sub-controller 200a may obtain a reference image and a learning model for identifying an object to be cooked from the server 3. The sub-controller 200a may perform identification of the object to be cooked from the image acquired by the camera 60 by using the reference image and the learning model. The sub-controller 200a may pre-process the image, identify the object to be cooked by using the learning model, and estimate the type, number, and/or size of the object to be cooked.

The sub-controller 200a may include a special processor capable of performing multiple input-multiple output operations (i.e., matrix operation) to process artificial intelligence algorithms. The special processor included in the sub-controller 200a may be referred to as a neural process unit (NPU).

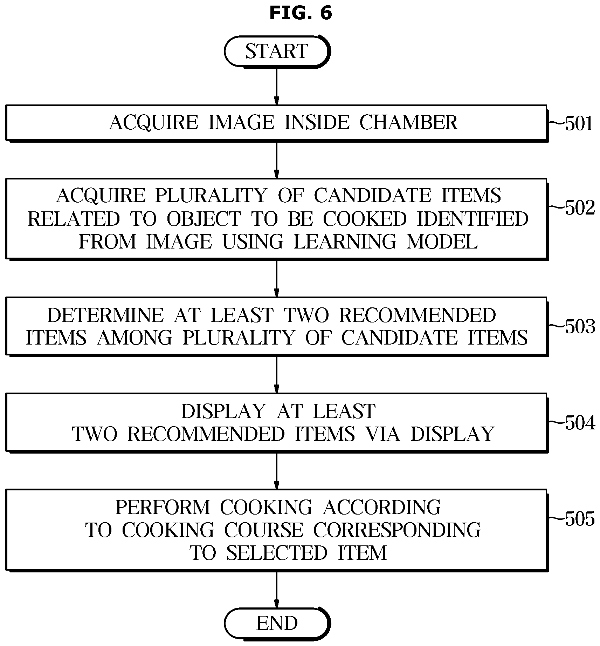

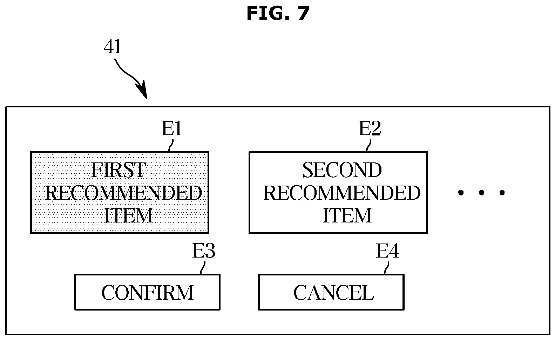

FIG. 6 is a flowchart for describing a method of controlling a cooking device according to an embodiment. FIG. 7 shows an example of a screen displaying a cooking device according to an embodiment.

Referring to FIG. 6, the controller 200 of the cooking device 1 may control the camera 60 to acquire an image of the inside of the chamber 50 (501). The controller 200 may identify an object to be cooked contained in the image by using a learning model. Based on an input of the image acquired by the camera 60 to the learning model, the learning model may output the type of the object to be cooked, the number of the objects to be cooked, and/or the size of the object to be cooked.

The learning model refers to an artificial intelligence (AI) model. The learning model may be created by machine learning and/or deep learning. The learning model may be created by the server 3 and stored in the memory 220 of the cooking device 1. A learning algorithm may include, for example, supervised learning, unsupervised learning, semi-supervised learning, or reinforcement learning, but is not limited thereto.

The learning model may include a plurality of artificial neural network layers. The artificial neural network may include deep neural network (DNN), convolutional neural network (CNN), recurrent neural network (RNN), Restricted Boltzmann Machine (RBM), deep belief network (DBN), bidirectional recurrent deep neural network (BRDNN), and/or deep Q-networks, but is not limited thereto. Additionally or alternatively, the AI model may include a software structure in addition to the hardware structure.

In addition, the controller 200 may acquire a plurality of candidate items related to the object to be cooked identified by using the learning model (502). The plurality of candidate items refer to items estimated identical or similar to the type of the identified object to be cooked. An item list including the plurality of candidate items related to the object to be cooked may be stored in the memory 220. The controller 200 may determine the plurality of candidate items with reference to the item list. The item list may be obtained from the server 3.

The item list may include cooking courses respectively corresponding to the plurality of candidate items. The cooking course may include cooking parameters such as cooking temperature, cooking time, output power of the heater 80 and output power of the fan 90. The cooking courses may vary according to the candidate items.

The controller 200 may determine at least two recommended items among the plurality of candidate items (503). A confidence value may be assigned to each of the plurality of candidate items. The confidence value may be represented as a probabilistic value indicating similarity between the identified object to be cooked and the candidate item. The controller 200 may determine at least two recommended items among the plurality of candidate items based on the confidence value of each of the plurality of candidate items (503).

The controller 200 may control the display 41 to display the at least two recommended items (504). The at least two recommended items may be displayed via the user device 2. The controller 200 may control the communication circuit 100 to transmit display information for displaying the at least two recommended items on the external user device 2 to at least one of the user device 2 and the server 3.

Referring to FIG. 7, at least two recommended items are displayed via the display 41 of the cooking device 1. For example, at least two recommended items may be sequentially or simultaneously displayed. In FIG. 7, a first graphic element E1 representing a first recommended item and a second graphic element E2 representing a second recommended item are displayed simultaneously.

The user may scroll through the plurality of recommended items by manipulating the display 41, the input device 42, or the user device 2. For example, in response to a touch scroll input of the display 41, a rotational input of a dial included in the input device 42, or a scroll input received from the user device 2, the controller 200 may control the display 41 to display recommended items other than the first recommended item and the second recommended item.

The user may select one recommended item by manipulating the display 41, the input device 42, or the user device 2. The display 41 may highlight the selected recommended item. Upon selecting one of the at least two recommended items, the controller 200 may automatically perform cooking according to a cooking course corresponding to the selected recommended item (505).

For example, in response to selection of the first graphic element E1 representing the first recommended item, the first graphic element E1 may be highlighted. Then, when the user presses a third graphic element E3 indicated as 'confirm', the controller 200 may start cooking according to the cooking course of the first recommended item. The start of cooking for the selected first recommended item may also be triggered by a cooking start command input via a separate button or the user device 2.

When the user presses a fourth graphic element E4 indicated as 'cancel', the display 41 may display another screen instead of the screen including the recommended item. For example, the controller 200 may control the display 41 to display a screen including other items which are not selected as the recommended item or a menu screen related to basic functions of the cooking device 1.

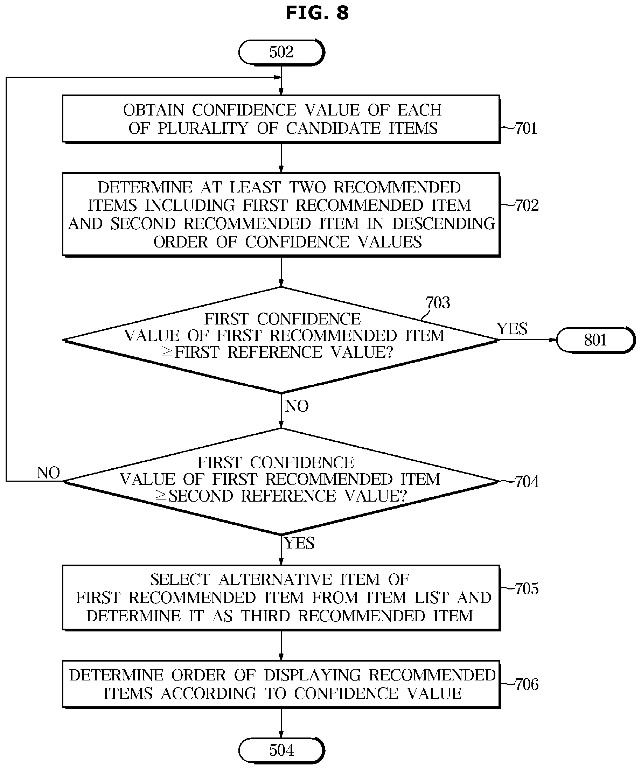

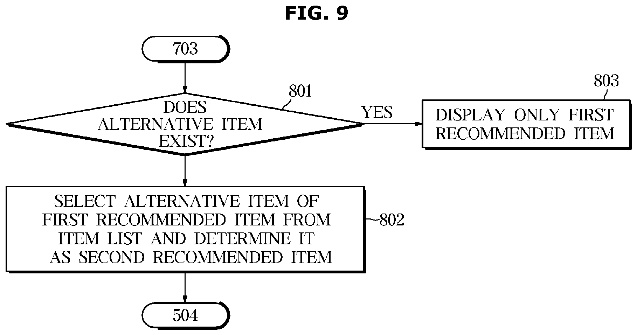

FIGS. 8 and 9 are flowcharts for describing the method of controlling the cooking device described in FIG. 6 in more detail.

Referring to FIG. 8, the controller 200 of the cooking device 1 may obtain a confidence value of each of the plurality of candidate items related to the object to be cooked by using the learning model (701). The confidence value may be expressed as a probabilistic value indicating similarity between each of the plurality of candidate items and the object to be cooked. As described above, the controller 200 may input the image acquired by the camera 60 to the learning model, and acquire the plurality of candidate items related to the object to be cooked as the output of the learning model. The learning model may assign a confidence value to each of the plurality of candidate items. Therefore, the controller 200 may obtain the confidence value of each of the plurality of candidate items. A higher confidence value of the candidate item may be judged as a higher similarity to the object to be cooked.

The controller 200 may determine at least two recommended items including a first recommended item having a first confidence value and a second recommended item having a second confidence value lower than the first confidence value in a descending order of the confidence values (702). That is, the controller 200 may determine the candidate item having the highest confidence value as the first recommended item and determine the candidate item having the second highest confidence value as the second recommended item. Similarly, a candidate item having the third highest confidence value may be determined as a third recommended item.

The controller 200 may select at least two recommended items among the plurality of candidate items such that a sum of the confidence values of the at least two recommended items is equal to or greater than a predetermined threshold value and equal to or less than a predetermined maximum value. For example, the threshold value may be 95% and the maximum value may be 100%. The first confidence value of the first recommended item may be 55%, and the second confidence value of the second recommended item may be 40%. The controller 200 may control the display 41 to display the first recommended item of the first rank and the second recommended item of the second rank in the descending order of the confidence values.

As another example, in the case where the first confidence value of the first recommended item is 40%, the second confidence value of the second recommended item is 30%, and the third confidence value of the third recommended item is 25%, the controller 200 may control the display 41 to display the first recommended item, the second recommended item, and the third recommended item.

The threshold value and the maximum value regarding the sum of the confidence values may vary according to product designs or the user. According to the threshold value and the maximum value regarding the sum of the confidence values, the number of recommended items may vary.

In addition, in the case of obtaining a user input for setting a maximum number of the recommended items via the user interface 40 or the user device 2, the controller 200 may select the recommended items within the maximum number set by the user input. By allowing the user to adjust the maximum number of the recommended items, convenience of the user for use of the cooking device 1 may be improved.

The controller 200 may determine an alternative item of the first recommended item as the second recommended item or a third recommended item based on the first confidence value of the first recommended item. An item list including at least one alternative item related to each of the plurality of candidate items may be stored in the memory 220. The item list may be obtained from the server 3.

The controller 200 may judge whether the first confidence value of the first recommended item is equal to or greater than a predetermined first reference value (703). Referring to FIG. 9, in the case where the first confidence value of the first recommended item is equal to or greater than the predetermined first reference value, the controller 200 may search for alternative items for replacing the first recommended item in the item list obtained from the memory 220 or the server 3 (801).

If an alternative item of the first recommended item exists in the item list, the controller 200 may determine the alternative item of the first recommended item as a second recommended item (802). In the case where a plurality of alternative items of the first recommended item exist, the controller 200 may select one of the plurality of alternative items. For example, confidence values of the first recommended item and the second recommended item selected from the plurality of candidate items within the maximum value of the sum of the confidence values may be 90% and 10%, respectively. The first reference value may be 90%. However, displaying of the second recommended item having the confidence value of 10% may be meaningless to the user and, rather, may result in providing the user with incorrect information. To solve this problem, the controller 200 may extract an alternative item capable of replacing the first recommended item from the item list, and determine the extracted alternative item as a second recommended item.

However, in the case where an alternative item of the first recommended item does not exist in the item list, the controller 200 may control the display 41 to display only the first recommended item (803). Because the confidence value of the first recommended item is very high, and there is no other alternative items, it is preferable to provide only the first recommended item as the identification result of the object to be cooked.

In addition, the controller 200 may calculate a confidence value of the alternative item. The controller 200 may determine the confidence value of the alternative item by multiplying the first confidence value of the first recommended item by a predetermined coefficient. Because the alternative item replaces a candidate item of the second rank having a lower similarity to the object to be cooked, the controller 200 may not add up the confidence value of the alternative item in the case of calculating the sum of the confidence values to determine the number of recommended items. Therefore, two recommended items having relatively high similarity to object to be cooked may be displayed via the display 41.

Referring back to FIG. 8, based on the first confidence value of the first recommended item less than the predetermined first reference value and equal to or greater than a predetermined second reference value lower than the first reference value, the controller 200 may select an alternative item of the first recommended item from the item list and determine the selected alternative item as a third recommended item (704 and 705).

For example, the confidence values of the first recommended item and the second recommended item selected out of the plurality of candidate items may be 60% and 35%, respectively. The first reference value may be 90%, and the second reference value may be 50%. In this case, the controller 200 may extract the alternative item capable of replacing the first recommended item from the item list and determine the extracted alternative item as a third recommended item. Although the similarity of the first recommended item to the object to be cooked is greater than the similarity of the second recommended item to the object to be cooked, both the first recommended item and the second recommended item may be slightly different from the object to be cooked in consideration of the confidence values. If both the first recommended item and the second recommended item are different from the object to be cooked, inaccurate information may be provided. To prevent this, the disclosed cooking device 1 may further provide another item capable of replacing the first recommended item and having an intermediate level of confidence value as a third recommended item. By additionally providing the third recommended item, a range of choices available to the user may be expanded and accuracy of information provided to the user may be raised to some extent.

Meanwhile, in the case where the first confidence value of the first recommended item is less than the second reference value, the controller 200 may judge that a recommended item cannot be selected from the plurality of items. In this case, the controller 200 may perform identification of an object to be cooked again and acquire a plurality of candidate items again. In addition, the controller 200 may control the display 41 to display a message informing the user of the failure to select a recommended item and/or requiring the user to directly select a cooking course for the object to be cooked.

The controller 200 may determine a confidence value of the third recommended item selected as an alternative item of the first recommended item by multiplying the first confidence value of the first recommended item by a predetermined coefficient. Because the third recommended item is provided to expand the range of choices, the controller 200 may not add up the confidence value of the third recommended item in the case of calculating the sum of the confidence values to determine the number of recommended items. Therefore, three recommended items having relatively high similarity to the object to be cooked may be displayed on the display 41.

The controller 200 may determine the order of displaying the recommended items in accordance with the confidence values of the recommended items (706). For example, the controller 200 may determine the order of displaying the first recommended item, the second recommended item, and the third recommended item by comparing the first confidence value of the first recommended item, the second confidence value of the second recommended item, and the third confidence value of the third recommended item. In the case where the confidence value of the first recommended item is 60%, the confidence value of the second recommended item is 35%, and the confidence value of the third recommended item is 47%, they may be displayed in the order of the first recommended item, the third recommended item, and the second recommended item. The controller 200 may control the display 41 to sequentially display the first recommended item, the third recommended item, and the second recommended item.

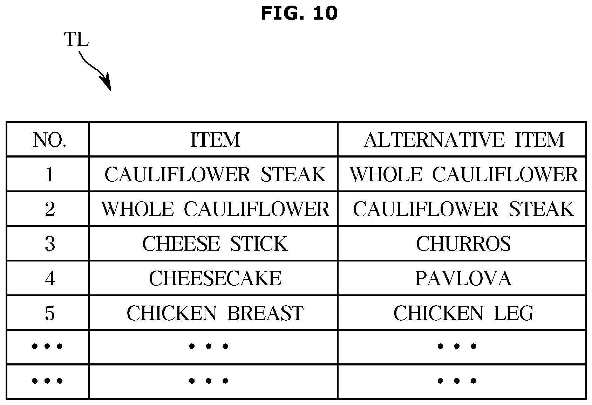

FIG. 10 illustrates an item list including alternative items related to candidate items.

Referring to FIG. 10, an item list TL may be stored in the memory 220 as table data. The item list TL may include at least one alternative item related to each of the plurality of candidate items. The item list TL may be created in the process of designing a product and stored in the memory 220, or may be downloaded from the server 3 to the memory 220.

For example, a first column of the item list TL may include an item number, a second column may include a candidate item, and a third column may include an alternative item. That is, the second column of the item list TL may include a candidate item estimated to be identical or similar to the identified object to be cooked in the image acquired by the camera 60. The third column of the item list TL may include an alternative item capable of replacing the candidate item.

An alternative item of a candidate item 'cauliflower steak' may be 'whole cauliflower'. On the contrary, an alternative item of a candidate item 'whole cauliflower' may be 'cauliflower steak'. An alternative item of a candidate item 'cheese stick' may be 'churros'. An alternative item of a candidate item 'cheesecake' may be 'Pavlova'. In addition, an alternative item of a candidate item 'chicken breast' may be 'chicken leg'.

In the item list TL, the candidate item matches the alternative item one to one, but the embodiment is not limited thereto. A plurality of alternative items may match one candidate item. In addition, because the candidate item and the alternative item included in the item list TL are experimentally selected, the embodiment is not limited thereto.

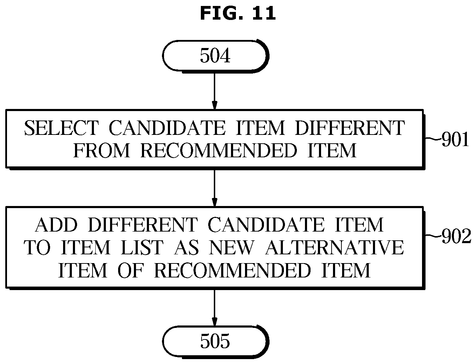

FIG. 11 is a flowchart describing a method of updating the item list of FIG. 10.

Referring to FIG. 11, after displaying at least two recommended items via the display 41 (504), a candidate item different from the at least two recommended items may be selected via the input device 42 (901).

For example, as described above in FIG. 7, if the user presses a cancel button in a state where the recommended item is displayed on the display 41, a screen including other items may be displayed on the screen. The items may be different candidate items that are not selected as recommended items. The user may select another candidate item by manipulating the user interface 40 or the user device 2. In addition, a candidate item related to another object to be cooked different from the identified object to be cooked may be selected by the user input.

Based on selection of a candidate item different from the at least two recommended items via the user interface 40, the controller 200 of the cooking device 1 may add the selected candidate item to the item list TL as a new alternative item of the first recommended item (902). Later, in the case where the same type of the object to be cooked is placed in the chamber 50, the controller 200 may select a recommended item in consideration of the alternative item newly added to the item list TL as well. As such, by updating the item list TL, it is possible to prevent inaccurate information from being provided to the user.

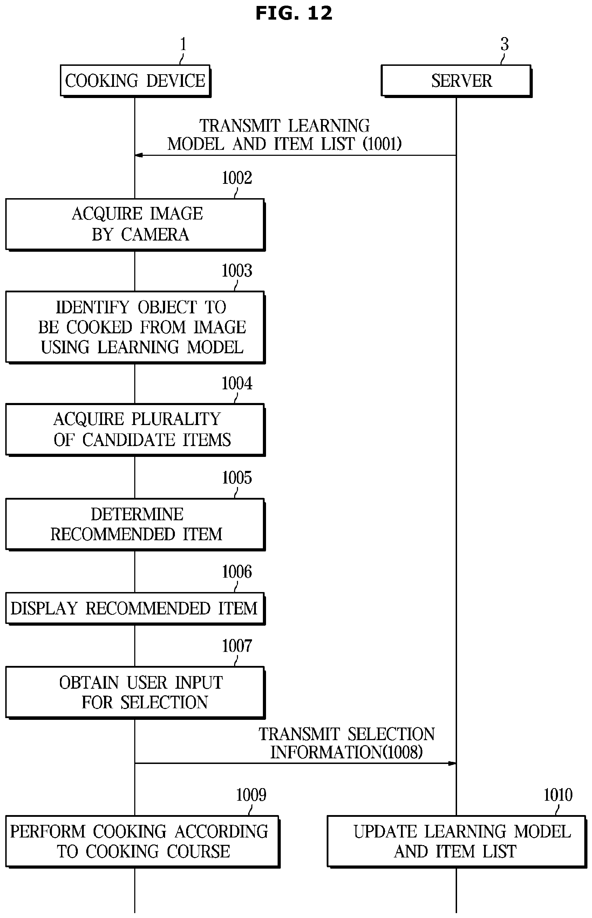

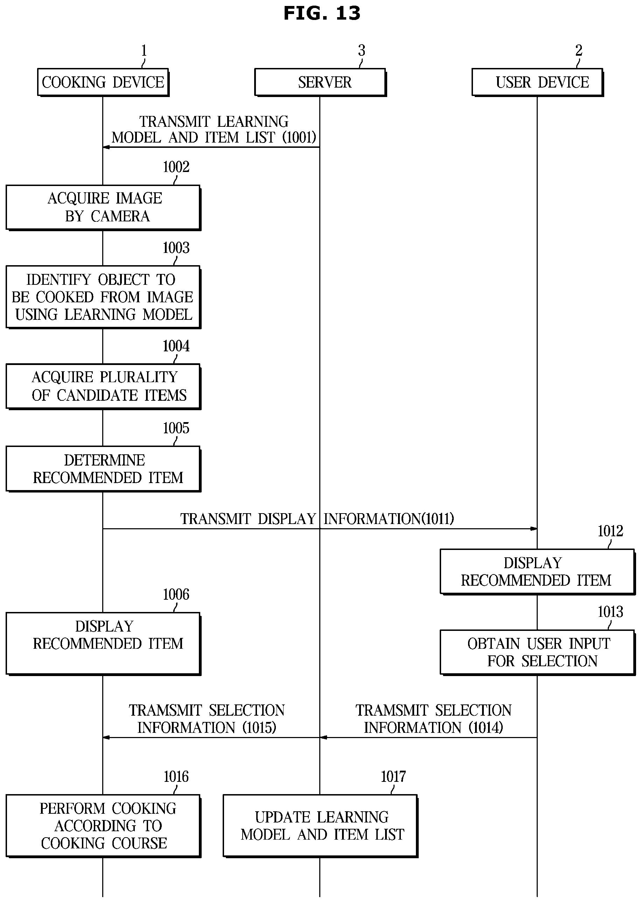

FIG. 12 is a flowchart describing an example of interaction between a cooking device and a server. FIG. 13 is a flowchart describing an example of interaction among a cooking device, a server, and a user device expanded from the example of FIG. 12.

Referring to FIG. 12, the cooking device 1 may obtain a learning model used to identify an object to be cooked and determine a candidate item related to the object to be cooked, from the server 3. In addition, the cooking device 1 may obtain the item list including candidate items and alternative items related to the object to be cooked, from the server 3 (1001). The learning model and the item list received from the server 3 may be stored in the memory 220 of the cooking device 1.

The cooking device 1 may acquire an image of the inside of the chamber 50 by using the camera 60 (1002) and identify the object to be cooked from the image by using the learning model (1003). In addition, the cooking device 1 may acquire a plurality of candidate items related to the object to be cooked by using the learning model (1004) and determine recommended items from the plurality of candidate items (1005). The cooking device 1 may display the recommended items on the display 41 (1006).

The cooking device 1 may obtain a user input for selecting one of the recommended items or a candidate item different from the recommended items (1007). The cooking device 1 may create selection information including the selected recommended item or the different candidate item and transmit the selection information to the server 3 (1008). The cooking device 1 may automatically perform cooking according to a cooking course corresponding to the selected recommended item or the selected different candidate item (1009). The server 3 may update the learning model and the item list by using the received selection information (1010).

Referring to FIG. 13, the cooking device 1 may transmit display information including the recommended items to the user device 2 (1011). The display information may be transmitted to the user device 2 via the server 3. Upon receiving the display information, the user device 2 may display the recommended items (1012).

The user device 2 may obtain a user input for selecting one of the recommended items or a candidate item different from the recommended items (1013). The user device 2 may create selection information including the selected recommended item or the different candidate item and transmit the selection information to the server 3 and the cooking device 1 (1014 and 1015). Upon receiving the selection information, the cooking device 1 may automatically perform cooking according to a cooking course corresponding to the selected recommended item or the selected different candidate item (1016). The server 3 may update the learning model and the item list by using the received selection information (1017).

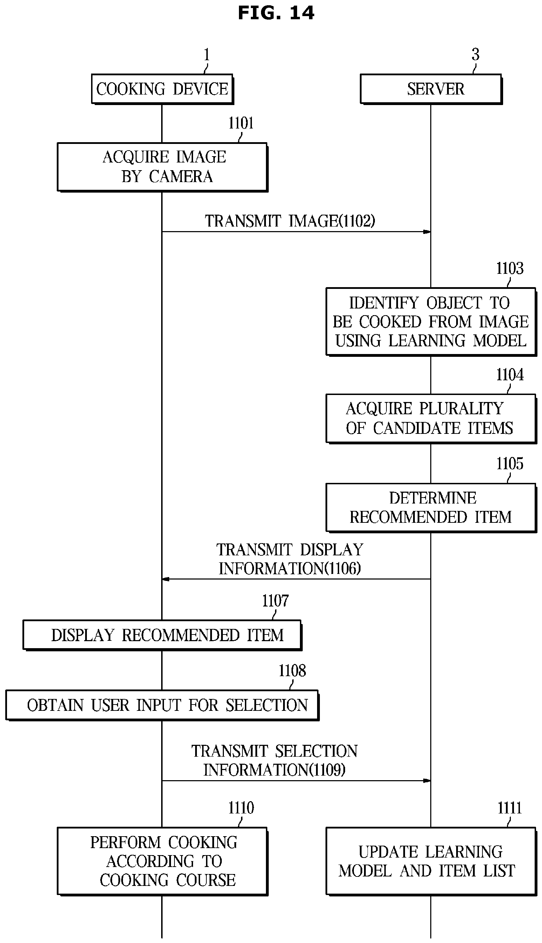

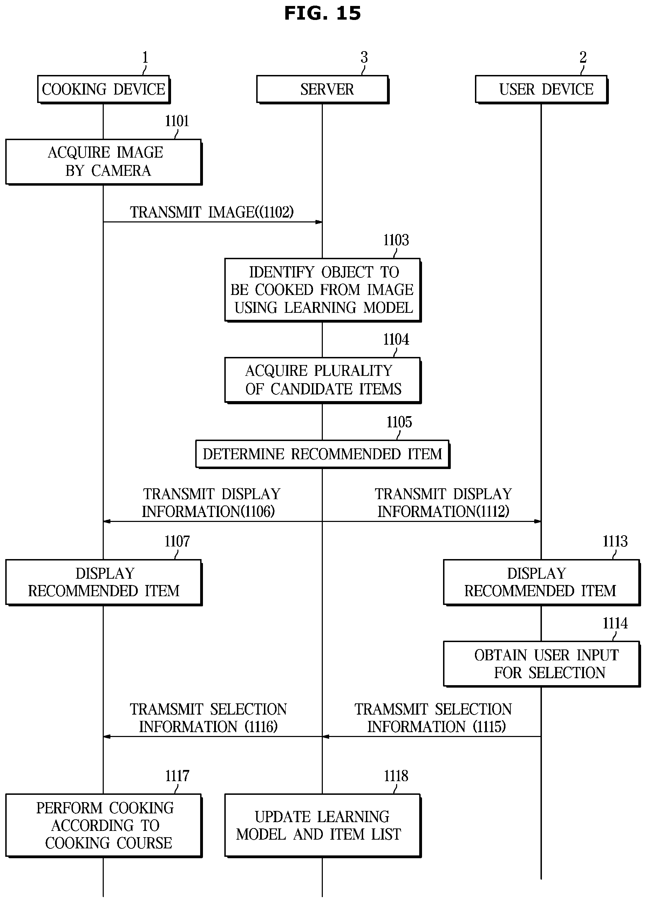

FIG. 14 is a flowchart describing another example of interaction between a cooking device and a server. FIG. 15 is a flowchart describing another example of interaction among a cooking device, a server, and a user device expanded from the example of FIG. 14.

Referring to FIG. 14, the cooking device 1 may acquire an image of the inside of the chamber 50 by using the camera 60 (1101) and transmit the image to the server 3 (1102). The server 3 may identify the object to be cooked from the image by using a learning model (1103). In addition, the server 3 may acquire a plurality of candidate items related to the object to be cooked by using the learning model (1104) and determine the recommended items among the plurality of candidate items (1105).

The server 3 may transmit display information including the recommended items to the cooking device 1 (1106). Upon receiving the display information, the cooking device 1 may display recommended items on the display 41 (1107). The cooking device 1 may obtain a user input for selecting one of the recommended items or a candidate item different from the recommended items (1108). The cooking device 1 may create selection information including the selected recommended item or the different candidate item and transmit the selection information to the server 3 (1109). The cooking device 1 automatically perform cooking according to a cooking course corresponding to the selected recommended item or the selected different candidate item (1110). The server 3 may update the learning model and the item list by using the received selection information (1111).

Referring to FIG. 15, the server 3 may transmit display information including the recommended items to the user device 2 (1112). Upon receiving the display information, the user device 2 may also display the recommended items (1113).

The user device 2 may obtain a user input for selecting one of the recommended items or a candidate item different from the recommended items (1114). The user device 2 may create selection information including the selected recommended item or the different candidate item and transmit the selection information to the server 3 and the cooking device 1 (1115 and 1116). Upon receiving the selection information, the cooking device 1 may automatically perform cooking according to a cooking course corresponding to the selected recommended item or the selected different candidate item (1117). The server 3 may update the learning model and the item list by using the received selection information (1118).

The cooking device 1 according to an embodiment includes: a display 41; a camera 60 configured to acquire an image of the inside of the chamber 50; a memory 220 configured to store a learning model used for identification of an object to be cooked; and a controller 200 electrically connected to the display, the camera, and the memory. The controller may acquire a plurality of candidate items related to the object to be cooked identified from the image acquired by using the learning model, determine at least two recommended items among the plurality of candidate items based on a confidence value of each of the plurality of candidate items, and control the display to display the at least two recommended items.

The controller may obtain the confidence value of each of the plurality of candidate items as a probabilistic value indicating similarity between each of the plurality of candidate items and the object to be cooked by using the learning model, and determine at least two recommended items including a first recommended item having a first confidence value and a second recommended item having a second confidence value lower than the first confidence value in a descending order of the confidence values.

The controller may determine the at least two recommended items such that a sum of the confidence values of the at least two recommended items is equal to or greater than a predetermined threshold value and equal to or less than a predetermined maximum value.

The memory may further store an item list including at least one alternative item related to each of the plurality of candidate items, and the controller may determine an alternative item of the first recommended item as a second recommended item or a third recommended item based on the first confidence value of the first recommended item.

The controller may select an alternative item of the first recommended item from the item list based on the first confidence value of the first recommended item equal to or greater than the predetermined first reference value, and determine the selected alternative item as the second recommended item.

The controller may select an alternative item of the first recommended item from the item list based on the first confidence value of the first recommended item less than the predetermined first reference value and equal to or greater than the predetermined second reference value lower than the first reference value, and determine the selected alternative item as the third recommended item.

The controller may determine a third confidence value of the third recommended item by multiplying the first confidence value of the first recommended item by a predetermined coefficient, and determine the order of displaying the first recommended item, the second recommended item, and the third recommended item by comparing the first confidence value, the second confidence value, and the third confidence value.

The memory may store the item list including at least one alternative item related to each of the plurality of candidate items, and based on selection of a candidate item different from the at least two recommended items via an input device, the controller may add the different candidate item to the item list as a new alternative item of the first recommended item.

Based on the user input obtained via the input device, the controller may set a maximum number of the at least two recommended items.

The cooking device may further include a communication circuit performing communication with the server, and the controller may control the communication circuit to obtain the learning model from the server via the communication circuit and transmit display information for displaying the at least two recommended items on the external user device to the server.

A method of controlling a cooking device according to an embodiment includes: acquiring an image of the inside of a chamber 50 by using a camera 60; identifying, by a controller 200, an object to be cooked inside the chamber from the acquired image by using a learning model obtained from a memory 220 or a server 3; obtaining, by the controller, a plurality of candidate items related to the object to be cooked by using the learning model; determining, by the controller, at least two recommended items among the plurality of candidate items based on a confidence value of each of the plurality of candidate items performed by the controller; and displaying the at least two recommended items via the display.

The obtaining of the plurality of candidate items may include obtaining a confidence value of each of the plurality of candidate items as a probabilistic value indicating similarity of each of the plurality of candidate items to the object to be cooked by using the learning model. The determining of the at least two recommended items may include determining a first recommended item having a first confidence value and a second recommended item having a second confidence value lower than the first confidence value in a descending order of the confidence values.

The at least two recommended items may be determined to have a sum of the confidence values of the at least two recommended items to be equal to or greater than a predetermined threshold value and equal to or less than a predetermined maximum value.

The method of controlling the cooking device may further include obtaining an item list including at least one alternative item related to each of the plurality of candidate items from the memory or the server. The determining of the at least two recommended items may include determining the alternative item of the first recommended item as the second recommended item or a third recommended item based on the first confidence value of the first recommended item.

The determining of the at least two recommended items may include selecting an alternative item of the first recommended item from the item list based on the first confidence value of the first recommended item equal to or greater than a predetermined first reference value, and determining the selected alternative item as the second recommended item.

The determining of the at least two recommended items may include selecting an alternative item of the first recommended item from the item list based on the first confidence value of the first recommended item less than the first reference value and equal to or greater than a predetermined second reference value less than the first reference value, and determining the selected alternative item as the third recommended item.

The determining of the at least two recommended items may further include: determining a third confidence value of the third recommended item by multiplying the first confidence value of the first recommended item by a predetermined coefficient; and determining the order of displaying the first recommended item the second recommended item, and the third recommended item by comparing the first confidence value, the second confidence value, and the third confidence value.

The method of controlling the cooking device may further include: obtaining an item list including at least one alternative item related to each of the plurality of candidate items from the memory or the server; and adding a different candidate item to the item list as a new alternative item of the first recommended item based on selection of the candidate item different from the at least two recommended items via the input device.

The method of controlling the cooking device may further include setting a maximum number of the at least two recommended items based on the user input obtained via the user device.

The method of controlling the cooking device may further include transmitting display information for displaying the at least two recommended items on an external user device, to the server.

As described above, according to the disclosed cooking device and the method of controlling the cooking device, the object to be cooked placed in the chamber may be identified and recommended items for automatic cooking of the object to be cooked may be provided to a user.

**In** addition, according to the disclosed cooking device and the method of controlling the cooking device, more accurate cooking information may be provided to the user by extracting a plurality of candidate items estimated as the object to be cooked and determining recommended items according to the confidence value of each of the plurality of candidate items.

Meanwhile, the embodiments of the disclosure may be implemented in the form of a storage medium for storing instructions to be carried out by a computer. The instructions may be stored in the form of program codes, and when executed by a processor, may generate program modules to perform operation in the embodiments of the disclosure.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the 'non-transitory storage medium' may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a storage medium (e.g., a compact disc read only memory (CD-ROM)), through an application store (e.g., Play Store^{™}), directly between two user devices (e.g., smart phones), or online (e.g., downloaded or uploaded). **In** the case of online distribution, at least part of the computer program product (e.g., a downloadable app) may be at least temporarily stored or arbitrarily created in a storage medium that may be readable to a device such as a server of the manufacturer, a server of the application store, or a relay server.

Although the embodiments of the present disclosure have been provided for illustrative purposes, the scope of the present disclosure is limited thereto. Various embodiments that may be modified and altered by those skilled in the art without departing from the principles and spirit of the present disclosure, the scope of which is defined in the claims, should be construed as falling within the scope of the present disclosure.

## Claims

1. A cooking device comprising:
a display;
a camera configured to acquire an image of the inside of a chamber;
a memory configured to store a learning model used to identify an object to be cooked; and
a controller electrically connected to the display, the camera, and the memory,
wherein the controller configured to:
acquire a plurality of candidate items related to the object to be cooked identified from the image acquired by using the learning model,
determine at least two recommended items among the plurality of candidate items based on a confidence value of each of the plurality of candidate items, and
control the display to display the at least two recommended items.

2. The cooking device according to claim 1, wherein the controller configured to
obtain a confidence value of each of the plurality of candidate items as a probabilistic value indicating similarity of each of the plurality of candidate items to the object to be cooked by using the learning model, and
determine the at least two recommended items comprising a first recommended item having a first confidence value and a second recommended item having a second confidence value lower than the first confidence value in a descending order of the confidence values.

3. The cooking device according to claim 2, wherein the controller configured to determine the at least two recommended items to have a sum of the confidence values of the at least two recommended items to be equal to or greater than a predetermined threshold value and equal to or less than a predetermined maximum value.

4. The cooking device according to claim 2, wherein the memory further configured to store an item list including at least one alternative item related to each of the plurality of candidate items, and
the controller configured to determine the alternative item of the first recommended item as the second recommended item or a third recommended item based on the first confidence value of the first recommended item.

5. The cooking device according to claim 4, wherein the controller configured to select an alternative item of the first recommended item from the item list based on the first confidence value of the first recommended item equal to or greater than a predetermined first reference value, and determine the selected alternative item as the second recommended item.

6. The cooking device according to claim 4, wherein the controller configured to select an alternative item of the first recommended item from the item list based on the first confidence value of the first recommended item less than the present first reference value and equal to or greater than a predetermined second reference value less than the first confidence value, and determine the selected alternative item as the third recommended item.

7. The cooking device according to claim 6, wherein the controller configured to
determine a third confidence value of the third recommended item by multiplying the first confidence value of the first recommended item by a predetermined coefficient, and
determine the order of displaying the first recommended item, the second recommended item, and the third recommended item by comparing the first confidence value, the second confidence value, and the third confidence value.

8. The cooking device according to claim 2, wherein
the memory configured to store an item list including at least one alternative item related to each of the plurality of candidate items, and
the controller configured to add a different candidate item to the item list as a new alternative item of the first recommended item based on selection of the candidate item different from the at least two recommended items via an input device.

9. The cooking device according to claim 1, wherein the controller configured to set a maximum number of the at least two recommended items based on a user input obtained via an input device.

10. The cooking device according to claim 1, further comprising a communication circuit communicating with the server,
wherein the controller configured to
obtain the learning model from the server via the communication circuit, and
control the communication circuit to transmit display information for displaying the at least two recommended items on an external user device, to the server.

11. A method of controlling a cooking device, the method comprising:
acquiring an image of the inside of a chamber by a camera;
identifying, by a controller, an object to be cooked inside the chamber from the acquired image by using a learning model obtained from a memory or a server;
acquiring, by the controller, a plurality of candidate items related to the object to be cooked by using the learning model;
determining, by the controller, at least two recommended items among the plurality of candidate items based on a confidence value of each of the plurality of candidate items; and
displaying the at least two recommended items via the display.

12. The method according to claim 11, wherein
the obtaining of the plurality of candidate items comprises obtaining a confidence value of each of the plurality of candidate items as a probabilistic value indicating similarity of each of the plurality of candidate items to the object to be cooked by using the learning model, and
the determining of the at least two recommended items comprises determining a first recommended item having a first confidence value and a second recommended item having a second confidence value lower than the first confidence value in a descending order of the confidence values.

13. The method according to claim 12, wherein the at least two recommended items are determined to have a sum of the confidence values of the at least two recommended items to be equal to or greater than a predetermined threshold value and equal to or less than a predetermined maximum value.

14. The method according to claim 12, further comprising obtaining an item list including at least one alternative item related to each of the plurality of candidate items from the memory or the server,
wherein the determining of the at least two recommended items comprises determining the alternative item of the first recommended item as the second recommended item or a third recommended item based on the first confidence value of the first recommended item.

15. The method according to claim 14, wherein the determining of the at least two recommended items comprises
selecting an alternative item of the first recommended item from the item list based on the first confidence value of the first recommended item equal to or greater than a predetermined first reference value, and determining the selected alternative item as the second recommended item.
